(19) **Europäisches Patentamt**

**European Patent Office**

**Office européen des brevets**

(11) **EP 0 950 267 B1**

(12) **EUROPÄISCHE PATENTSCHRIFT**

(45) Veröffentlichungstag und Bekanntmachung des Hinweises auf die Patenterteilung:
**05.06.2002   Patentblatt 2002/23**

(51) Int Cl.⁷: **H01M 8/04**, B60L 11/18

(21) Anmeldenummer: **97910207.6**

(22) Anmeldetag: **18.09.1997**

(86) Internationale Anmeldenummer:
**PCT/DE97/02103**

(87) Internationale Veröffentlichungsnummer:
**WO 98/15022 (09.04.1998 Gazette 1998/14)**

(54) **VERFAHREN ZUR LUFTVERSORGUNG EINER PEM-BRENNSTOFFZELLENANLAGE**

PROCESS FOR SUPPLYING WITH AIR A POLYMER ELECTROLYTE MEMBRANE (PEM) FUEL CELL SYSTEM

PROCEDE POUR ALIMENTER EN AIR UNE INSTALLATION A PILES A COMBUSTIBLE A MEMBRANE ELECTROLYTIQUE POLYMERE

(84) Benannte Vertragsstaaten:
**AT DE FR GB IT NL**

(30) Priorität: **02.10.1996   DE 19640808**

(43) Veröffentlichungstag der Anmeldung:
**20.10.1999   Patentblatt 1999/42**

(73) Patentinhaber: **SIEMENS AKTIENGESELLSCHAFT**
**80333 München (DE)**

(72) Erfinder:
 • **STÜHLER, Walter**
   **D-96114 Hirschaid (DE)**
 • **STENGER, Herbert**
   **D-90559 Burgthann (DE)**
 • **KEIM, Martin**
   **D-91096 Möhrendorf (DE)**

(56) Entgegenhaltungen:
EP-A- 0 633 157          DE-A- 4 201 795
DE-A- 4 318 818          US-A- 5 290 641

 • **PATENT ABSTRACTS OF JAPAN vol. 012, no. 244 (E-631), 9.Juli 1988 & JP 63 032868 A (MITSUBISHI ELECTRIC CORP), 12.Februar 1988,**
 • **SWAN D H ET AL: "FUEL CELL DYNAMICS IN TRANSIT APPLICATIONS" INTERNATIONAL ELECTRIC VEHICLE SYMPOSIUM, ANAHEIM, DEC. 5 - 7, 1994, Bd. VOL. 1, Nr. SYMP. 12, 5.Dezember 1994, ELECTRIC VEHICLE ASSOCIATION OF THE AMERICAS (EVAA), Seiten 73-80, XP000488472**
 • **PATENT ABSTRACTS OF JAPAN vol. 096, no. 006, 28.Juni 1996 -& JP 08 045525 A (MAZDA MOTOR CORP), 16.Februar 1996, -& DATABASE WPI Derwent Publications Ltd., London, GB; AN 96-164934 XP002055680**

**Beschreibung**

Die Erfindung bezieht sich auf ein Verfahren zum Betreiben einer PEM-Brennstoffzellenanlage.

Brennstoffzellen ermöglichen die direkte Erzeugung elektrischer Energie aus Wasserstoff und Sauerstoff mit erheblich besserem Wirkungsgrad und deutlich geringeren Schadstoffemissionen als herkömmliche Energieerzeuger. Außerdem arbeiten sie fast geräuschlos.

Neben diesen grundsätzlichen Vorteilen hat die Brennstoffzelle mit einem festen Elektrolyten aus Kunststoff (Polymere Elektrolyt Membran-PEM) weitere positive Eigenschaften wie eine kleine Betriebstemperatur von weniger als 80°C, günstiges Überlastverhalten, geringe Spannungsdegradation und hohe Lebensdauer, günstiges Last- und Temperaturzyklusverhalten und Fehlen eines flüssigen korrosiven Elektrolyten. Zudem ist sie auch für einen Betrieb mit Luft aus der Umgebung anstatt Sauerstoff verwendbar.

Alle diese Eigenschaften machen die mit Luft betreibbare PEM-Brennstoffzelle zu einem nahezu idealen Stromerzeuger z.B. für den abgasfreien elektrischen Betrieb von Kraftfahrzeugen.

PEM-Brennstoffzellen sind für sich allein nicht betreibbar. Daher werden ein PEM-Brennstoffzellenblock, der eine Vielzahl von PEM-Brennstoffzellen umfaßt, ein Betriebsteil und eine zugeordnete Modulelektronik zu einem PEM-Brennstoffzellen-Modul zusammengefaßt. Im Betriebsteil sind die Einrichtungen für die Versorgung mit Wasserstoff $H_2$ und Luft, für die Produktwasserabfuhr, für die Verlustwärmeabfuhr, für die Befeuchtung der Reaktanden und für die Separation der Gasverunreinigungen zusammengefaßt.

Wichtige Kenngrößen, die den Betrieb der PEM-Brennstoffzellenanlage mit Luft charakterisieren, sind das Luftverhältnis $\lambda$ und der Luftvolumenstrom $V_L$. Der Luftvolumenstrom $V_L$ ist ein Maß für die den PEM-Brennstoffzellenblock durchströmende Menge an Luft. Das Luftverhältnis $\lambda$ gibt den zusätzlichen Bedarf an Luft bei der Reaktion an, wenn anstelle von reinem Sauerstoff $O_2$ Luft aus der Umgebung verwendet wird.

Als Problem erweist sich beim Betrieb der PEM-Brennstoffzellenanlage die notwendige Dynamik für kurzzeitige und schnelle Laständerungen. Aus der deutschen Offenlegungsschrift 43 18 818 ist eine Luftversorgung, für ein luftbetriebenes Brennstoffzellensystem, bekannt, die einen Verdichter verwendet. Dieser Verdichter arbeitet nach dem Verdrängerprinzip mit einem spaltabgedichteten Verdrängerkörper. Außerdem arbeitet er ölfrei und hat eine Drehzahlspreizung von mindestens 1:10. Durch Verwendung eines permanent erregten Synchronmotors wird ein gutes Teillastverhalten des Verdichters erreicht. In dieser Offenlegungsschrift wird jedoch nur beschrieben, mit Hilfe welcher Komponenten dieses Teillastverhalten erreicht werden kann.

Der Erfindung liegt somit die Aufgabe zugrunde ein Verfahren zum Betreiben einer PEM-Brennstoffzellenanlage anzugeben, welches einen Betriebsmodus für einen Verdichter angibt um eine bessere Dynamik für kurzzeitige und schnelle Laständerungen zu erreichen.

Diese Aufgabe wird erfindungsgemäß durch das Verfahren gemäß Anspruch 1 gelöst.

Durch dieses Verfahren wird eine verbesserte Dynamik für kurzzeitige und schnelle Laständerungen erreicht. Es ist somit besonders für den elektrischen Antrieb von Kraftfahrzeugen geeignet, beispielsweise für den Betrieb eines Gabelstaplers.

Vorzugsweise wird der elektrische Strom I des PEM-Brennstoffzellenblocks als Regelgröße von einem Stromistwertsensor fortlaufend erfaßt. Beim Regeln wird der elektrische Strom I als zu regelnde Größe fortlaufend erfaßt, mit einer anderen Größe, der Führungsgröße, verglichen und im Sinne einer Angleichung an die Führungsgröße beeinflußt. Kennzeichen für das Regeln ist der geschlossene Wirkungsablauf, bei dem der elektrische Strom I als Regelgröße im Wirkungsweg des Regelkreises fortlaufend sich selbst beeinflußt.

Insbesondere wird der neue Sollwert $I_{SN}$ des elektrischen Stromes I des PEM-Brennstoffzellenblocks als Führungsgröße von einem Sollwertgeber vorgegeben.

In einer weiteren Ausgestaltung wird der elektrische Strom I als Regelgröße fortlaufend mit dem neuen Sollwert $I_{SN}$ des elektrischen Stromes I als Führungsgröße verglichen.

Vorzugsweise wird der elektrische Strom I des PEM-Brennstoffzellenblocks in Abhängigkeit von der Drehzahl n des Verdichters beeinflußt.

Insbesondere wird ein dem PEM-Brennstoffzellenblock nachgeschaltetes Luftventil so eingestellt, daß bei maximaler Drehzahl $n_M$ des Verdichters und bei maximalem elektrischen Strom I des PEM-Brennstoffzellenblocks der Luftvolumenstrom $V_L$ durch denselbigen einem vorgegebenen Luftverhältnis $\lambda$ entspricht. Durch diese Maßnahmen werden optimierte Betriebsbedingungen für die PEM-Brennstoffzellenanlage geschaffen, wie z.B. ein geeigneter Betriebsdruck der Betriebsmittel im PEM-Brennstoffzellenblock oder die Konstanthaltung des Luftverhältnisses $\lambda$ bei sich änderndem elektrischen Strom I durch Regelung der Drehzahl n des Verdichters.

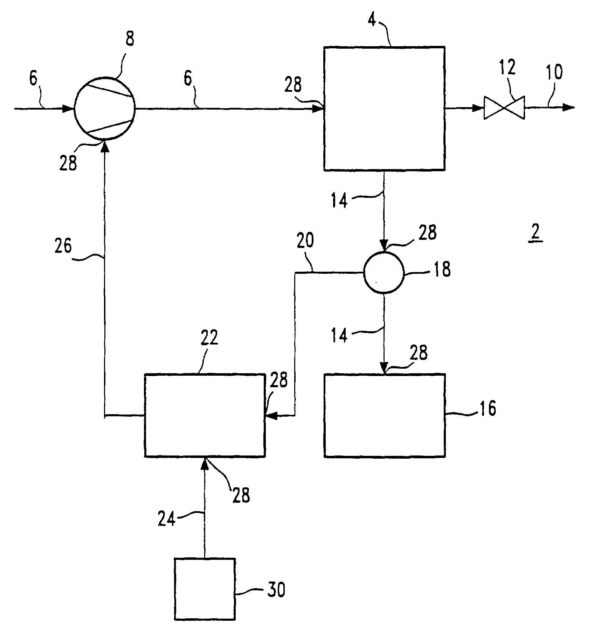

Zur weiteren Erläuterung der Erfindung wird auf das Ausführungsbeispiel der Zeichnung verwiesen, in deren einziger FIG eine PEM-Brennstoffzellenanlage mit einem PEM-Brennstoffzellenblock und einem vorgeschalteten drehzahlgesteuerten Verdichter schematisch dargestellt ist.

Gemäß der FIG umfaßt eine PEM-Brennstoffzellenanlage 2 einen sich aus einer Vielzahl von PEM-Brennstoffzellen zusammensetzenden PEM-Brennstoffzellenblock 4. Die PEM-Brennstoffzellenanlage 2 ist beispielsweise Teil eines elektrisch betriebenen Kraftfahrtzeuges, beispielsweise eines Personenkraftwagens, eines Busses oder eines Gabelstaplers.

Zum Betreiben der PEM-Brennstoffzellenanlage 2 werden als Betriebsmittel beispielsweise Wasserstoff $H_2$ und Luft aus der Umgebung verwendet.

Über einen Zuweg 6 wird Luft in den PEM-Brennstoffzellenblock 4 für die elektrochemische Reaktion innerhalb des PEM-Brennstoffzellenblocks 4 eingespeist. In dem Zuweg 6 ist ein drehzahlgesteuerter Verdichter 8 dem PEM-Brennstoffzellenblocks 4 vorgeschaltet, um den geeigneten Luftvolumenstrom $V_L$ für den PEM-Brennstoffzellenblock 4 zur Verfügung zu stellen.

Über einen Abweg 10 wird die in dem PEM-Brennstoffzellenblock 4 bei der elektrochemischen Reaktion nicht verbrauchte Luft aus demselbigen abgeführt. In dem Abweg 10 ist ein Luftventil 12 angeordnet. Dieses dem PEM-Brennstoffzellenblock 4 in dem Abweg 10 nachgeschaltete Luftventil 12 wird so eingestellt, daß bei maximaler Drehzahl $n_M$ des drehzahlgesteuerten Verdichters 8 und bei maximalem elektrischen Strom I des PEM-Brennstoffzellenblocks 4 der Luftvolumenstrom $V_L$ durch den PEM-Brennstoffzellenblock 4 einem vorgegebenen Luftverhältnis λ entspricht.

Der in dem PEM-Brennstoffzellenblock 4 bei der elektrochemischen Reaktion erzeugte elektrische Strom I wird über eine elektrische Leitung 14 in einen Verbraucher 16 eingespeist. Bei dem Verbraucher 16 handelt es sich beispielsweise um den elektrischen Motor des elektrisch angetriebenen Kraftfahrzeuges.

In die elektrische Leitung 14 ist zwischen dem PEM-Brennstoffzellenblock 4 und dem Verbraucher 16 ein Stromistwertsensor 18 zum fortlaufenden Erfassen des elektrischen Stromes I des PEM-Brennstoffzellenblockes 4 geschaltet.

Der elektrische Strom I des PEM-Brennstoffzellenblockes 4 wird als Regelgröße über eine Leitung 20 auf eine Regeleinheit 22 geschaltet. Außerdem wird ein neuer Sollwert $I_{SN}$ des elektrischen Stromes I als Führungsgröße für den Verbrauchers 16 mit einem Sollwertgeber 30 über eine Signalleitung 24 auf die Regeleinheit 22 geschaltet. Bei einem elektrisch betriebenen Kraftfahrzeug beispielsweise ist der Sollwertgeber 30 das Gaspedal.

In der Regeleinheit 22 wird der elektrische Strom I des PEM-Brennstoffzellenblocks 4, welcher mit dem Stromistwertsensor 18 fortlaufend erfaßt wird, mit dem neuen Sollwert $I_{SN}$ des elektrischen Stromes I fortlaufend verglichen.

Als Ausgangssignal der Regeleinheit 22 wird eine an den neuen Sollwert $I_{SN}$ angeglichene Drehzahl $n_{SN}$ für den drehzahlgesteuerten Verdichter 8 über eine elektrische Signalleitung 26 auf denselbigen geschaltet. Wird der drehzahlgesteuerte Verdichter 8 nun mit der Drehzahl $n_{SN}$ betrieben, so wird ein Luftvolumenstrom $V_L$ in den PEM-Brennstoffzellenblocks 4 eingespeist, der es diesem ermöglicht den neuen Sollwert $I_{SN}$ des elektrischen Stromes I zu erzeugen und in den Verbraucher 16 einzuspeisen.

Der Wirkungsweg zum Regeln des elektrischen Stromes I des PEM-Brennstoffzellenblocks 4 setzt sich somit aus der elektrischen Leitung 14, aus dem Stromistwertsensor 18, aus dem Verbraucher 16, aus der elektrischen Signalleitung 20, aus der Regeleinheit 22, aus dem Sollwertgeber 30 mit der elektrischen Signalleitung 24, aus der elektrischen Signalleitung 26, aus dem drehzahlgesteuerten Verdichter 8 und aus dem Teil des Zuweges 6, der zwischen dem Verdichter 8 und dem PEM-Brennstoffzellenblock 4 angeordnet ist, zusammen. Die Wirkungsrichtung wird durch die Pfeile 28 angegeben.

Bei diesem Verfahren zum Betreiben einer PEM-Brennstoffzellenanlage 2 wird zum Regeln des elektrischen Stromes I des PEM-Brennstoffzellenblocks 4 von einem ersten auf einen zweiten Sollwert, d. h. mit anderen Worten auf den neuen Sollwert $I_{SN}$, in einem ersten Schritt die Drehzahl n des Verdichters 8 auf einen Maximalwert $n_M$ eingestellt und in einem zweiten Schritt auf eine dem neuen Sollwert $I_{SN}$ des elektrischen Stromes I des PEM-Brennstoffzellenblocks 4 entsprechende Drehzahl $n_{SN}$ verringert.

Beim Regeln wird die Regelgröße I fortlaufend mit der Führungsgröße $I_{SN}$ verglichen. Die Angleichung der Regelgröße I an die Führungsgröße $I_{SN}$ erfolgt in der Regeleinheit 22 nach dem Gesetz von Faraday:

$$V_L = λ * \frac{0{,}2091}{0{,}21} * I * n_B * \frac{T_L}{273{,}15} \, ,$$

wobei

$V_L$ der Luftvolumenstrom durch den PEM-Brennstoffzellenblock 4 in l/h,

λ das Luftverhältnis,

$0{,}2091 * I * n$ der Volumenstrom an Sauerstoff $O_2$ in l/h durch den Brennstoffzellenblock 4 berechnet nach dem Faradayschem Gesetz,

I der in dem PEM-Brennstoffzellenblock 4 erzeugte elektrische Strom in A und

$n_B$ die Anzahl der PEM-Brennstoffzellen in dem PEM-Brennstoffzellenblock 4,

0,21 der volumetrische Anteil von Sauerstoff $O_2$ in der Luft und

$T_L$ die Temperatur der den PEM-Brennstoffzellenblock 4 durchströmenden Luft in K ist.

Jedem Wert I des in dem PEM-Brennstoffzellenblock 4 erzeugten elektrischen Stromes entspricht somit ein bestimmter Wert $V_L$ des Luftvolumenstromes durch den PEM-Brennstoffzellenblock 4, der zum Erzeugen des elektrischen Stomes I notwendig ist.

Außerdem ist in der Regeleinheit eine Gerätekennlinie für den drehzahlgesteuerten Verdichter 8 hinterlegt, welche zu jeder Dehzahl n den von dem Verdichter 8 erzeugten und in den PEM-Brennstoffzellenblock 4 eingespeisten Luftvolumenstrom $V_L$ angibt.

Als Ausgangsgröße der Regeleinheit 22 wird somit eine angeglichene Drehzahl $n_{soll}$ auf den drehzahlgesteuerten Verdichter 8 geschaltet die nach dem Faraday'schen Gesetz und der Gerätekennlinie einem bestimmten Volumenstrom $V_L$ zum Erzeugen des neuen Sollwertes $I_{SN}$ des elektrischen Sromes I im PEM-Brennstoffzellenblock 4 entspricht.

Durch diesen Betriebsmodus wird für kurzzeitige und schnelle Laständerungen eine verbesserte Dynamik erreicht. Er ist somit besonders für den elektrischen Antrieb von Kraftfahrzeugen geeignet.

### Patentansprüche

1. Verfahren zum Betreiben einer PEM-Brennstoffzellenanlage (2) mit wenigstens einem PEM-Brennstoffzellenblock (4) und einem vorgeschalteten drehzahlgesteuerten Verdichter (8), wobei zum Regeln des elektrischen Stromes I des PEM-Brennstoffzellenblocks (4) auf einen neuen größeren Sollwert $I_{SN}$ in einem ersten Schritt die Drehzahl n des Verdichters (8) auf einen vorgegebenen Maximalwert $n_M$ eingestellt wird, der größer ist als der dem neuen Sollwert $I_{SN}$ des elektrischen Stromes entsprechende Wert $n_{SN}$ und dann in einem zweiten Schritt die Drehzahl n des Verdichters (8) auf den dem neuen Sollwert $I_{SN}$ entsprechenden Wert $n_{SN}$ verringert wird.

2. Verfahren nach Anspruch 1, **dadurch gekennzeichnet, daß** der elektrische Strom I des PEM-Brennstoffzellenblocks (4) als Regelgröße von einem Stromistwertsensor (18) fortlaufend erfaßt wird.

3. Verfahren nach Anspruch 1 oder 2, **dadurch gekennzeichnet, daß** der neue Sollwert $I_{SN}$ des elektrischen Stromes I des PEM-Brennstoffzellenblocks (4) als Führungsgröße von einem Sollwertgeber (30) vorgegeben wird.

4. Verfahren nach Anspruch 3, **dadurch gekennzeichnet, daß** der elektrische Strom I als Regelgröße fortlaufend mit dem neuen Sollwert $I_{SN}$ des elektrischen Stromes I als Führungsgröße verglichen wird.

5. Verfahren nach Anspruch 4, **dadurch gekennzeichnet, daß** der der elektrische Strom I des PEM-Brennstoffzellenblocks (4) in Abhängigkeit von der Drehzahl n des Verdichters (8) beeinflußt wird.

6. Verfahren nach einem der vorhergehenden Ansprüche, **dadurch gekennzeichnet, daß** ein dem PEM-Brennstoffzellenblock (4) nachgeschaltetes Luftventil (12) so eingestellt wird, daß bei maximaler Drehzahl $n_M$ des Verdichters (8) und bei maximalem elektrischen Strom I des PEM-Brennstoffzellenblocks (4) der Luftvolumenstrom durch denselbigen einem vorgegebenen Luftverhältnis λ entspricht.

### Claims

1. Method of operating a PEM fuel-cell system (2) comprising at least one PEM fuel-cell block (4) and an upstream rotational-speed-controlled compressor (8), wherein, to control the electrical current I of the PEM fuel-cell block (4) to a new, greater setpoint $I_{SN}$, the rotational speed n of the compressor (8) is adjusted, in a first step, to a specified maximum value $n_M$ that is greater than the value $n_{SN}$ corresponding to the new setpoint $I_{SN}$ of the electrical current and then, in a second step, the rotational speed n of the compressor (8) is reduced to the value $n_{SN}$ corresponding to the new setpoint $I_{SN}$.

2. Method according to Claim 1, **characterized in that** the electrical current I of the PEM fuel-cell block (4) is continuously recorded as controlled variable of a current actual-value sensor (18).

3. Method according to Claim 1 or 2, **characterized in that** the new setpoint $I_{SN}$ of the electrical current I of the PEM fuel-cell block (4) is specified as reference variable of a setpoint generator (30).

4. Method according to Claim 3, **characterized in that** the electrical current I is continuously compared with the new setpoint $I_{SN}$ of the electrical current I as reference variable.

5. Method according to Claim 4, **characterized in that** the electrical current I of the PEM fuel-cell block (4) is modified as a function of the rotational speed n of the compressor (8).

6. Method according to one of the preceding claims, **characterized in that** an air valve (12) connected downstream of the PEM fuel-cell block (4) is adjusted in such a way that, at maximum rotational speed $n_M$ of the compressor (8) and at maximum electrical current I of the PEM fuel-cell block (4), the volumetric air flowrate through the latter corresponds to a specified air ratio λ.

### Revendications

1. Procédé pour faire fonctionner une installation (2) de piles à combustible à membre électrolytique polymère (PEM) ayant au moins un bloc (4) de piles à combustible à membrane électrolytique polymère et, monté en amont, un compresseur (8) commandé en vitesse de rotation, la vitesse n de rotation du compresseur (8) étant dans une première étape, pour réguler le courant I électrique du bloc (4) de piles à combustible à membrane électrolytique polymère à une nouvelle valeur $I_{SN}$ de consigne plus grande, réglée à une valeur $n_M$ maximum prescrite, qui est plus grande que la valeur $n_{SN}$ correspondant à la nouvelle valeur $I_{SN}$ de consigne du courant électrique et ensuite, dans une deuxième étape, la vitesse n de rotation du compresseur (8) est diminuée jusqu'à la valeur $n_{SN}$ correspondant à la nouvelle valeur $I_{SN}$ de consigne.

2. Procédé suivant la revendication 1, **caractérisé en ce que** le courant I électrique du bloc (4) de piles à combustible à membrane électrolytique polymère est relevé en continu en tant que grandeur de réglage par un capteur (18) de valeur réelle du courant.

3. Procédé suivant la revendication 1 ou 2, **caractérisé en ce que** la nouvelle valeur $I_{SN}$ de consigne du courant I électrique du bloc (4) de piles à combustible à membrane électrolytique polymère est prescrite en tant que grandeur de référence par un générateur (30) de valeur de consigne.

4. Procédé suivant la revendication 3, **caractérisé en ce que** le courant I électrique en tant que grandeur de réglage est comparé en continu à la nouvelle valeur $I_{SN}$ de consigne du courant I électrique en tant que grandeur de référence.

5. Procédé suivant la revendication 4, **caractérisé en ce que** le courant I électrique du bloc (4) de piles à combustible à membrane électrolytique polymère est influencé en fonction de la vitesse n de rotation du compresseur (8).

6. Procédé suivant l'une des revendications précédentes, **caractérisé en ce qu'**une soupape (12) à air, montée en aval du bloc (4) de piles à combustible à membrane électrolytique polymère, est réglée de façon à ce que, pour une vitesse $n_M$ de rotation maximum du compresseur (8) et pour un courant I électrique maximum du bloc (4) de piles à combustible à membrane électrolytique polymère, le courant d'air en volume passant dans ce bloc corresponde à un rapport d'air $\lambda$ prescrit.

EP 0 950 267 B1

6